(19) Europäisches Patentamt
European Patent Office
Office européen des brevets

(11) Veröffentlichungsnummer: **0 298 965 B1**

## (12) EUROPÄISCHE PATENTSCHRIFT

(45) Veröffentlichungstag der Patentschrift:
03.04.91 Patentblatt 91/14

(51) Int. Cl.⁵ : **E21B 43/24, E21B 43/40,**
**C01B 3/34**

(21) Anmeldenummer: 87901373.8

(22) Anmeldetag : 02.03.87

(86) Internationale Anmeldenummer:
PCT/DE87/00086

(87) Internationale Veröffentlichungsnummer:
**WO 87/05658 24.09.87 Gazette 87/21**

(54) VERFAHREN ZUR TERTIÄREN ÖLGEWINNUNG AUS TIEFBOHRLÖCHERN MIT VERWERTUNG DES AUSTRETENDEN ERDÖLGASES.

(30) Priorität : 19.03.86 DE 3609253

(43) Veröffentlichungstag der Anmeldung :
18.01.89 Patentblatt 89/03

(45) Bekanntmachung des Hinweises auf die
Patenterteilung :
03.04.91 Patentblatt 91/14

(84) Benannte Vertragsstaaten :
DE FR GB NL

(56) Entgegenhaltungen :
FR-A- 2 393 052
US-A- 3 844 349
US-A- 4 007 786
US-A- 4 098 339
Baibakow + Garuschew: "Wärmemethoden
zur Ausbeutung von Erdöllagerstäten", Moskau, "Nedra", 1981, S. 246-250

(73) Patentinhaber : INTERATOM Gesellschaft mit
beschränkter Haftung
Friedrich-Ebert-Strasse
W-5060 Bergisch-Gladbach 1 (DE)

(72) Erfinder : JÄGER, Walter
Schulweg 33
W-5250 Engelskirchen (DE)
Erfinder : SCHREIBER, Dietmar
Bergmannsweg 1
W-5060 Bergisch Gladbach 1 (DE)

(74) Vertreter : Fuchs, Franz-Josef, Dr.-Ing. et al
Postfach 22 13 17
W-8000 München 22 (DE)

## Beschreibung

Die vorliegende Erfindung betrifft ein Verfahren zur tertiären Ölgewinnung und Wasserstoffproduktion mit Verwertung des austretenden Erdölgases. Diese Erfindung ist von besonderem Interesse für Raffinerien in der Nachbarschaft von bestehenden Ölfeldern.

Es ist bekannt, die in üblicher Weise mit Pumpen (primär) erschöpften Ölfelder durch Einleitung von Wasser bzw. Inertgas (sekundär) oder auch Dampf oder heißem Wasser (tertiär) weiter auszunutzen, wobei durch Temperaturerhöhung die Viskosität des im Boden vorhandenen Erdöls herabgesetzt wird und außerdem das Öl durch Wasser oder Gas verdrängt wird. Nach diesen Verfahren wird auch bei den bereits primär erschöpften Ölfeldern außer dem gewünschten Öl noch ein Anteil an kohlenwasserstoffhaltigen Gasen frei, der bisher abgefackelt oder zur Wärmegewinnung durch Verbrennung verwendet wurde. Die Dampferzeugung nur zur Einleitung in ausgebeutete Ölfelder ist mit hohen Kosten verbunden und der Energieaufwand ist beträchtlich. Die Verbrennung wertvoller Rohstoffe nur zum Zwecke der einmaligen Dampferzeugung ist aus volkswirtschaftlicher Sicht und mit Rücksicht auf die Umwelt bedenklich und hat auch technische Probleme.

In einer Veröffentlichung von N.K. Baibakow und A.R. Garuschew "Wärmethoden zur Ausbeutung von Erdöllagerstätten" Moskau "Nedra", 1981, Seite 246 bis 250, ist ein Hochtemperatur-Reaktor 1 dargestellt, der seine Wärme, wie bei der vorliegenden Anmeldung, zunächst an einen Methanspaltofen 2 und dann an einen Dampferzeuger 3 abgibt. Der bei der Methanspaltung entstehende Wasserstoff wird aber nicht z.B. in einer chemischen Fabrik genutzt, sondern nur als Medium für den Energietransport über weite Entfernungen. Das Methan wird mit Wärmeenergie gespalten. Es gibt seine fühlbare Wärme an den ankommenden Gasstrom ab und wird dann bei geringen Temperaturen und durch lange Rohrleitungen zu einem Dampferzeuger 4 geleitet. Dort wird der Wasserstoff mit dem Kohlenmonoxid und mit Hilfe von Katalysatoren wieder in Methan umgewandelt, wobei eine erhebliche Wärmeenergie frei wird, die zur Dampferzeugung genutzt wird. Anschließend fließt das Methan bei geringen Temperaturen im geschlossenen Kreislauf wieder zum Methankonversionssystem 2 zurück. Dabei ist kein Zusatz von Dampf notwendig.

Aufgabe der vorliegenden Erfindung ist es, die genannten Nachteile zu vermeiden, indem die tertiäre Ölgewinnung rationeller gestaltet wird und das dabei austretende Erdölgas als wertvoller Rohstoff zur Wasserstoffproduktion verwertet wird.

Zur Lösung dieser Aufgabe wird ein Verfahren nach dem 1. Anspruch vorgeschlagen. Ein gasgekühlter Hochtemperaturreaktor, wie er beispielsweise in der Zeitschrift "Atomwirtschaft" vom März 1986 auf den Seiten 157-159 als Modul-Reaktor beschrieben ist, könnte auch Prozeßwärme mit einer Temperatur zur Verfügung stellen, die zur Methanspaltung ausreichend ist. Dabei hat das den Spaltofen verlassende Medium noch eine so hohe Temperatur, daß damit Wasserdampf von hohem Druck und der entsprechenden Temperatur erzeugt werden kann, wie er zur tertiären Ölgewinnung benötigt wird. Die mit einem Hochtemperaturreaktor erzeugte nukleare Wärme allein zur Dampferzeugung nutzt im vorliegenden Fall den oberen Temperaturbereich nicht aus, während die nukleare Gasspaltung allein die im unteren Temperaturbereich anfallende Wärme nicht nutzen kann. Die Kopplung dieser beiden so unterschiedlichen Verfahren führt, im ganzen betrachtet, zu günstigen Kosten. Der bei der Verwertung von Erdölgasen zunächst naheliegende Gedanke, durch Verbrennung eines Teils dieses Gases den anderen Teil zu spalten, ist nicht nur aus volkswirtschaftlicher Sicht und mit Rücksicht auf die Umwelt bedenklich, er führt auch zu technischen Problemen. Die Beheizung eines Spaltofens durch direkte Verbrennung von Erdölgasen ist nicht zweckmäßig wegen der Korrosion aufgrund des Schwefelgehaltes. Die auch bei der vorliegenden Erfindung notwendige Entschwefelung des Erdölgases ist zwangsläufig mit einem besonderen Aufwand verbunden, der allein für die anschließende Verbrennung nicht gerechtfertigt, für eine anschließende Verwertung des Gases jedoch vertretbar ist, da das entschwefelte Erdölgas ein wertvolles Produkt darstellt. Ein weiterer Vorteil des hier vorzugsweise vorgeschlagenen gasgekühlten Hochtemperaturreaktors mit Kugelbrennelementen ist seine hohe Verfügbarkeit. Während die gasgekühlten Hochtemperaturreaktoren mit blockförmigen Brennelementen und auch die Druckwasserreaktoren mit Brennstäben in regelmäßigen Abständen stillgesetzt werden müssen, um die Brennelemente umzusetzen oder auszuwechseln, kann dieser Reaktor längere Zeit betrieben werden, indem ihm kontinuierlich während des Betriebes Brennelemente unten entnommen und oben wieder zugeführt werden. Dieser Gesichtspunkt ist für den kontinuierlichen Betrieb von Ölfeldern und Raffinerien von besonderer Bedeutung.

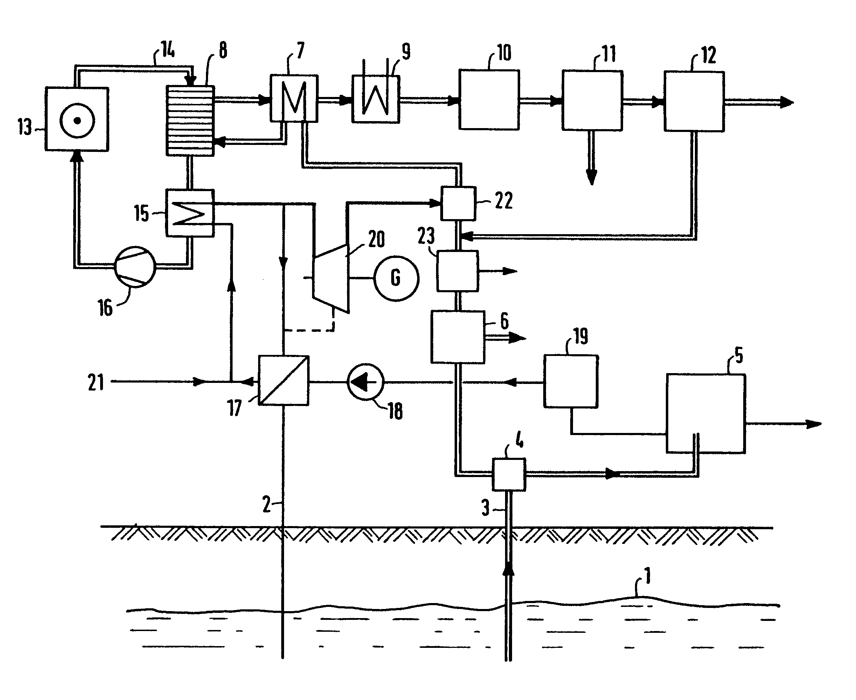

Die Figur zeigt in schematischer Darstellung ein Fließschema.

In ein Erdölfeld 1 mit zahlreichen Tiefbohrlöchern führt eine Dampfleitung 2, während eine benachbarte Austrittsleitung 3 ein Gemisch aus Erdöl und Wasser und im Öl gelösten Gasen nach oben führt zu einem Gasabscheider 4, von dem aus ein Gemisch von Erdöl und Wasser zu einer Wasserabtrennung 5 geleitet wird, während das Gas nach einer Entschwefelung 6 und einen Abscheider 23 für höhere Kohlenwasserstoffe durch einen Vorwärmer 7 und mit Zusatz von Wasserdampf in einen Spaltofen 8 geleitet wird. Das dort unter Wärmezufuhr gespaltene Gas wird zunächst in dem Vorwärmer 7 und danach in einem Dampferzeuger 9 abgekühlt ; in einer Konvertierung 10 wird das im Gas enthaltene Kohlenmonoxid mit Wasserdampf in Kohlendioxid und Wasserstoff überführt ; das dort austretende Gasgemisch wird in einem Wäscher 11 von Kohlendioxid befreit und in der Tieftemperatur-Gaszerlegung 12 vom Methan und anderen kohlenwasserstoffhaltigen Gasen getrennt, die dem Gasstrom hinter dem Abscheider 23 erneut zugeführt werden. Die für den Spaltofen 8 notwendige Wärme von hoher Temperatur wird von einem gasgekühlten Hochtemperaturreaktor 13 über einen geschlossenen Heliumkreislauf 14 zur Verfügung gestellt, der nach Austritt aus dem Spaltofen 8 noch einen Dampferzeuger 15 beheizt und von einem Gebläse 16 wieder zum Reaktor 13 geleitet wird. Der im Dampferzeuger 15 erhitzte Dampf kann direkt über die Leitung 2 zur Beheizung des Erdölfeldes verwendet werden, zweckmäßigerweise wird ein Dampfumformer 17 dazwischengeschaltet, so daß die in bezug auf Wasserqualität anspruchsvollen Anlagenteile 15 und 20 mit einem sorgfältig aufbereiteten Speisewasser beaufschlagt werden können, während der in das Erdölfeld einzuleitende Dampf von geringerer Qualität mit einer Speisepumpe 18 aus einer Wasseraufbereitung 19 entnommen werden kann, die wiederum das aus der Wasserabtrennung 5 zwangsläufig austretende Wasser verwertet. Je nach den erforderlichen Mengen, Drücken und Temperaturen können die für das Verfahren notwendigen Dampfmengen teilweise direkt aus den Dampferzeugern 9 und 15 oder nach Arbeitsleistung in der Dampfturbine 20 entnommen werden. 21 ist eine Einspeisung von Wasser als Ersatz für die Dampfentnahme im Mischer 22, die dem Kreislauf nicht mehr zugeführt wird. In dem Abscheider 23 werden höhere Kohlenwasserstoffe (mehr als C$_4$) abgeschieden und einer besonderen Verwertung zugeführt. Weitere vorteilhafte Ausgestaltungen der Erfindung ergeben sich aus den abhängigen Ansprüchen.

**Ansprüche**

1. Verfahren zur tertiären Ölgewinnung und Wasserstoffproduktion durch Einleitung von Dampf in ein Erdölfeld und Abzug, Trennung und Aufbereitung des austretenden Öl/Gas/Wasser-Gemisches, wobei die Wärme eines mit Helium gekühlten Hochtemperatur-Reaktors (13) zur Beheizung eines Spaltofens (8) und eines oder mehrerer Dampferzeuger (15, 9, 17) benutzt wird, **dadurch gekennzeichnet, daß** der produzierte Dampf teilweise über eine Leitung (2) in das Ölfeld (1) geleitet wird und teilweise mit dem aus dem Ölfeld (bei 3) austretenden und in Abscheidern (4, 6, und 23) aufbereiteten Methan (bei 22) gemischt und nach Vorwärmung in einem Vorwärmer (7) in dem Spaltofen (8) zur Spaltung von Methan zu Wasserstoff und Kohlenmonoxid benutzt wird.

2. Verfahren nach Anspruch 1, wobei der in einem oder mehreren Dampferzeugern (15 ; 9) produzierte Dampf teilweise einer Dampfturbine (20) zugeleitet wird, die einen elektrischen Generator (G) antreibt, **dadurch gekennzeichnet, daß** Abdampf aus der Turbine (20) in einem Mischer (22) mit dem aufbereiteten Methan gemischt wird.

3. Verfahren nach Anspruch 1 oder 2, **dadurch gekennzeichnet, daß** der in dem Dampferzeuger (15) produzierte Dampf einen Dampfumformer (17) beheizt und daß das aus einer Wasseraufbereitung (19) austretende Wasser mit Hilfe einer an sich bekannten Speisepumpe (18) dem Dampfumformer (17) zugeführt und dort im Wärmeaustausch mit dem Dampf aus dem Dampferzeuger (15) verdampft und danach als Dampf dem Ölfeld (1) über die Leitung (2) zugeführt wird.

4. Verfahren nach Anspruch 1, 2 oder 3, **dadurch gekennzeichnet, daß** die aus dem Spaltofen (8) austretende Mischung von im wesentlichen Wasserstoff, Kohlenmonoxid und Dampf zunächst in dem Vorwärmer (7) und dann in einem Dampferzeuger (9) abgekühlt wird und daß in einer Konvertierung (10) das Kohlenmonoxid mit Wasserdampf in Kohlendioxid und Wasserstoff überführt und in einem Wäscher (11) das Kohlendioxid abgetrennt wird und in einer Tieftemperatur-Gaszerlegung (12) Methan und andere kohlenwasserstoffhaltige Stoffe abgetrennt werden, die zwischen dem Mischer (22) und einem Abscheider (23) dem zu spaltenden Gasstrom wieder zugeführt werden.

5. Verfahren nach einem der vorhergehenden Ansprüche, **dadurch gekennzeichnet, daß** das (bei 4) abgetrennte Gas (in 6) entschwefelt wird.

6. Verfahren nach Anspruch 5, **dadurch gekennzeichnet, daß** das Gas nach der Entschwefelung (6) in einem Abscheider (23) von höheren Kohlenwasserstoffen befreit wird.

**Claims**

1. Process for tertiary oil extraction and hydrogen production through the introduction of steam into a crude oil field and withdrawal, separation and processing of the issuing oil/gas/water mixture, whereby the heat of a high-temperature reactor (13), cooled with helium, is used for heating a cracking oven (8) and a steam generator (15 and/or 9), characterized in that the steam produced in the steam generator (15) is in part conducted by means of a pipe (2) into the oil field (1) and is in part mixed with methahe (at 22), which has issued from the oil field (at 3) and has been processed in separators (4, 6 and 23), and after preheating in a pre-heater (7) in (he cracking oven (8) is used for cracking methane into hydrogen and carbon monoxide.

2. Process according to claim 1, whereby the steam produced in the steam generator (15) is in part conducted to a steam turbine (20) which drives an electrical generator (G), characterized in that exhaust steam from the turbine (20) is mixed in a mixer (22) with the processed methane.

3. Process according to claim 1 or 2, characterized in that the steam produced in the steam generator (15) heats a steam converter (17) and in that the water issuing from a water processor (19) is supplied, with the help of a feed pump (18) known per se, to the steam converter (17) and is evaporated there in heat exchange with the steam from the steam generator (15) and thereafter is supplied as steam to the oil field (1) by means of the pipe (2).

4. Process according to claim 1, 2 or 3, characterized in that the mixture of substantially hydrogen, carbon monoxide and steam issuing from the cracking oven (8) is cooled first of all in the preheater (7) and then in a steam generator (9) and in that the carbon monoxide with water vapour is converted in a converter (10) into carbon dioxide and hydrogen and the carbon dioxide is separated in a washer (11) and in a cryogenic gas decompositor (12) methane and other hydrocarbon-containing substances are separated, which are again supplied between the mixer (22) and a separator (23) to the gas stream to be cracked.

5. Process according to one of the preceding claims, characterized in that the separated gas (at 4) is desulphurized (in 6).

6. Process according to claim 5, characterized in that after the desulphurizing (6) the gas is freed from higher hydrocarbons in a separator (23).


**Revendications**

1. Procédé d'extraction tertiaire du pétrole et de production d'hydrogène, par introduction de vapeur d'eau dans un champ de pétrole et évacuation, séparation et traitement du mélange huile/gaz/eau sortant, la chaleur d'un réacteur à haute température (13), à refroidissement par de l'hélium, étant utilisée pour chauffer un four de dissociation (8) et un générateur de vapeur (15 et/ou 9), caractérisé en ce que la vapeur d'eau produite dans le générateur de vapeur (15) est envoyée partiellement par un conduit (2) au champ de pétrole (1) et est mélangée partiellement au méthane (en 22) sortant du champ de pétrole (en 3) et traité dans des séparateurs (4, 6 et 23) et, après avoir été préchauffée dans un dispositif de préchauffage (7), est utilisée dans le four de dissociation (8) pour la dissociation du méthane en hydrogène et en monoxyde de carbone.

2. Procédé suivant la revendication 1, dans lequel la vapeur d'eau produite dans le générateur de vapeur (15) est envoyée partiellement à une turbine à vapeur (20) qui entraîne une génératrice (G) électrique, caractérisé en ce que la vapeur sortant de la turbine (20) est mélangée dans un mélangeur (22) au méthane traité.

3. Procédé suivant la revendication 1 ou 2, caractérisé en ce que la vapeur d'eau produite dans le générateur de vapeur (15) chauffe une installation de transformation de la vapeur (17), et en ce que l'eau sortant de l'installation de traitement de l'eau (19) est envoyée, à l'aide d'une pompe d'alimentation (18) en soi connue, à l'installation de transformation de la vapeur (17) et y est évaporée par échange de chaleur avec la vapeur d'eau sortant du générateur de vapeur (15) et est envoyée ensuite, en tant que vapeur, au champ de pétrole (1) par le conduit (2).

4. Procédé suivant la revendication 1, 2 ou 3, caractérisé en ce que le mélange qui sort du four de dissociation (8) et qui est constitué essentiellement d'hydrogène, de monoxyde de carbone et de vapeur d'eau est refroidi d'abord dans le dispositif de préchauffage (7) et ensuite dans un générateur de vapeur (9), et en ce que, dans un convertisseur (10), le monoxyde de carbone est transformé par de la vapeur d'eau en dioxyde de carbone et en hydrogène, le dioxyde de carbone est séparé, dans un laveur (11) et le méthane et d'autres substances contenant des hydrocarbures sont séparés, dans une installation de fractionnement des gaz à basse température (12), ces substances étant retournées au courant gazeux à dissocier entre le mélangeur (22) et un séparateur (23).

5. Procédé suivant l'une des revendications précédentes, caractérisé en ce que le gaz (en 6), séparé (en 4), est désulfuré.

6. Procédé suivant la revendication 5, caractérisé en ce que, après la désulfuration (6), le gaz est débarrassé dans un séparateur (23) des hydrocarbures supérieurs.